# EUROPEAN PATENT SPECIFICATION

(11) **EP 3 226 174 B1**
(45) Date of publication and mention of the grant of the patent: **18.11.2020**
(21) Application number: 17161555.2
(22) Date of filing: 17.03.2017
(51) Int. Cl.: G06K 9/00, G09G 3/3225

(54) **EMBEDDED ACTIVE MATRIX ORGANIC LIGHT EMIITING DIODE (AMOLED) FINGERPRINT SENSOR AND SELF-COMPENSATING AMOLED**
FINGERABDRUCKSENSOR MIT EINGEBETTETER ORGANISCHER AKTIVMATRIX-LEUCHTDIODE (AMOLED) UND SELBSTKOMPENSIERENDER AMOLED
CAPTEUR D'EMPREINTES DIGITALES À MATRICE ACTIVE INCORPORÉE À DIODE ÉLECTROLUMINESCENTE ORGANIQUE (AMOLED) ET AMOLED À AUTO-COMPENSATION

(30) Priority: 30.03.2016 US 201615085270
(43) Date of publication of application: 04.10.2017
(73) Proprietor: Motorola Mobility LLC, Chicago, IL 60654 (US)
(72) Inventor: HONG, Seongchul Daniel, Vernon Hills, IL Illinois 60061 (US)
(74) Representative: Openshaw & Co.

(56) References cited:
- US-A1- 2005 200 291
- US-A1- 2007 241 998
- US-A1- 2013 194 199
- US-A1- 2014 111 560
- US-A1- 2014 240 370
- SE HWAN KIM ET AL: "48.3: A 2 Inch LTPS AMOLED with an Embedded Lateral p-i-n Photodiode Sensors", SID 2008, 2008 SID INTERNATIONAL SYMPOSIUM, SOCIETY FOR INFORMATION DISPLAY, LOS ANGELES, USA, vol. XXXIX, 18 May 2008 (2008-05-18), pages 724-727, XP007016610, ISSN: 0008-966X

## Description

### BACKGROUND

Many devices include a fingerprint sensor to provide a degree of security for the device. Specifically, a device such as a cellular phone or other portable device can include a fingerprint sensor to enable the user to lock the device and then subsequently unlock the device by having their fingerprint scanned by the fingerprint sensor. If the fingerprint matches the fingerprint profile stored on the device, the device will be unlocked. If, on the other hand, the fingerprint does not match the fingerprint profile stored on the device, the device cannot be unlocked.

Typically, fingerprint sensors are located somewhere on the housing of the device. For example, many cellular phones include a fingerprint sensor located on what can be considered as the bezel of the device, outside the display active area. Doing so consumes device real estate and can reduce the display size.

Many computing devices, including cellular phones and other larger devices, utilize active matrix organic light emitting diodes (AMOLEDs) for their displays. AMOLED displays can suffer from a defect known as "burn-in". That is, frequently displayed images, such as a lock screen or standard icons, can permanently imprint onto the display. This is because individual light-emitting pixels, or diodes, within an AMOLED matrix decay over time. Whenever a diode emits light, it begins breaking down. As the diode loses coherency, its color accuracy begins to fall off. This is partly because individual pixels do not decay at the same rate. So, for example, because navigation and status icons appear most or all of the time, the associated light-emitting pixels wear out first. Further, these types of displays can suffer from what is known as the "mura effect." The mura effect can manifest itself in the form of black lines and blotches that appear on the display. This can result in brightness uniformity issues. The mura effect can arise due to the way the display is aligned with the thin film transistors. In some instances, alignment problems between AMOLED films and transistor planes can result in a non-uniform display. One way to address burn-in and mura issues is by compensating individual pixels to deal with the non-uniform display.
For those who design these types of computing devices, challenges continue to exist to improve product designs that enhance the user experience while, at the same time, conserve resources to keep product costs competitive.

US 2014/240370 A1 discloses a display which includes: a light-emitting section provided in a display region; and a light-receiving section provided in the display region and configured to receive light from the light-emitting section. SE HWAN KIM ET AL, "48.3: A 2 Inch LTPS AMOLED with an Embedded Lateral p-i-n Photodiode Sensors", SID 2008, 2008 SID INTERNATIONAL SYMPOSIUM, SOCIETY FOR INFORMATION DISPLAY, LOS ANGELES, USA, (20080518), vol. XXXIX, ISSN 0008-966X, pages 724 - 727 discloses an AMOLED with an embedded p-i-n photodiode.
US 2014/111560 A1 discloses a liquid crystal display device that can suppress variation in gradation of color temperature.
US 2007/241998 A1 discloses electroluminescent display devices.
US 2005/200291 A1 discloses a method and device for reading display pixel emission and ambient luminance levels.
US 2013/0194199 A1 discloses systems, methods, and devices in which photodetectors disposed throughout a display are used to control the display brightness. The photodetectors are to be used for ambient light sensing, proximity sensing, or to compensate for aging OLEDs. In some embodiments, photodiodes are fabricated with OLEDs during the TFT fabrication process.
US 2014/240370 A1 discloses a light-receiving section which detects information (luminescence information) regarding the amount of the light from each light-emitting section (each pixel), and acquires information regarding the amount of external light (external light information). The light-receiving section then sends a photoelectrically-converted light-receiving signal to the correction circuit.

### SUMMARY OF INVENTION

The invention is defined by the appended set of claims. In the following description, anything which falls outside the scope of the appended set of claims is to be understood as an example useful for understanding the invention.

### BRIEF DESCRIPTION OF THE DRAWINGS

Embodiments of embedded active matrix organic light emitting diode (AMOLED) fingerprint sensors in a display active area and self-compensating circuitry are described with reference to the following FIGS. The same numbers may be used throughout to reference like features or components that are shown in the FIGS:
FIG. 1 illustrates an organic light emitting diode (OLED).
FIG. 2 illustrates an example pixel circuit for an AMOLED display.
FIG. 3 illustrates an AMOLED display with embedded fingerprint sensors in accordance with one embodiment.
FIG. 4 illustrates an AMOLED display with embedded fingerprint sensors in accordance with one embodiment.
FIG. 5 illustrates an example PIN diode circuit in accordance with one or more embodiments.
FIG. 6 illustrates a substrate and sensor formation process in accordance with one or more embodiments.
FIG. 7 illustrates an example computing device in accordance with one or more embodiments.
FIG. 8 illustrates an example computing device in accordance with one or more embodiments.
FIG. 9 is a flow diagram that describes steps in a method in accordance with one or more embodiments.
FIG. 10 is a flow diagram that describes steps in a method in accordance with one or more embodiments.
FIG. 11 illustrates a computing device in accordance with one or more embodiments.

### DETAILED DESCRIPTION

### Overview

Various embodiments provide a computing device, such as a handheld computing device or cellular phone, that includes a fingerprint sensor embedded in the device's display active area. The fingerprint sensor is composed of a series of PIN diodes that are configured to operate in a photo-receiving mode. In various embodiments, the PIN diodes are formed as active matrix organic light emitting diodes (AMOLEDs) at least partially within the gap between pixels in the display active area. The density of PIN diodes can vary, such as by being formed adjacent every pixel, every two pixels, every four pixels, and the like. The PIN diodes serving as the fingerprint sensor can be connected with a touch sensor, force touch sensor, or any other suitable sensor that detects a finger, to cause pixels located adjacent a touched area to light up the touched area to increase light input to the PIN diodes. Doing so enables a fingerprint to be detected by the device, as described below in more detail.

Integrating the fingerprint sensor into the display active area can reduce the cost to produce a handheld computing device and can enable the display active area to be increased in size. Moreover, no additional fingerprint sensor flex is needed and the sensing integrated circuit can be mounted on the display flex. Moreover, flexibility is enhanced by virtue of incorporating the fingerprint sensor PIN diodes within most if not all of the display active area. In this manner, any area on the display active area that is touched by a user can serve as a fingerprint sensor. This increases the freedom in device design and cellular phone design. Further, using AMOLEDs to implement the PIN diodes results in very small power consumption because, in some embodiments, only areas that are touched are illuminated. Further, devices or phones that incorporate fingerprint sensors as described in this document can serve as convenient scanners since the whole display active area can serve as a photo sensor. Moreover, the diode layer can also serve as an ambient light sensor.

In other embodiments, a series of PIN diodes, formed as active matrix organic light emitting diodes (AMOLEDs), can enable an associated display to be self-compensating. Specifically, the PIN diodes can be used to sense the brightness of an area of the display to enable computation of a compensation factor that can then be used to compute a calibrated brightness value that can be used program or drive individual pixels or, more accurately, individual pixel circuitry of the display. In at least some embodiments, the PIN diodes are formed at least partially within the gap between pixels in the display active area. The density of PIN diodes can vary, such as by being formed adjacent every pixel, every two pixels, every four pixels, and the like.

In at least some embodiments, the series of PIN diodes that provide the fingerprint sensor can also serve a dual role insofar as supporting the self-compensating function. In these instances, design consideration is given to decoupling the fingerprint sensor from the display input which is used for compensation.

Before describing the various embodiments, the following discussion is provided to facilitate the reader's understanding of organic light emitting diodes (OLEDs) and in particular, active matrix organic light emitting diodes (AMOLEDs).

### Organic Light Emitting Diodes

An OLED can operate in both a light-producing mode and a light sensing-mode.

In the light-producing mode, an OLED converts electrical energy into light by way of electroluminescence. In this mode, the OLED is forward biased with an external voltage causing electrons and holes to be injected into an organic (carbon-based) material of the OLED. The electrons and holes combine in the organic material into an electron-hole pair and, in the process, emit a photon of light.

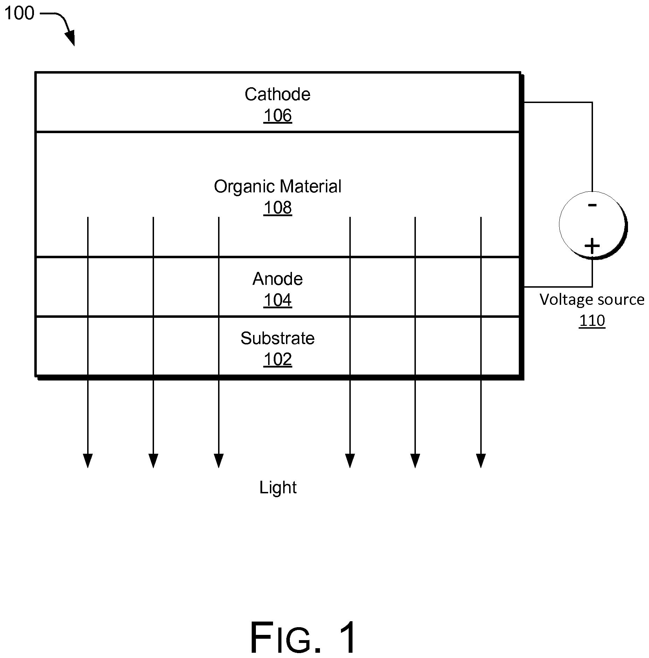

FIG. 1 shows an example OLED generally at 100. The OLED is formed on a substrate 102, such as glass and includes an anode 104, a cathode 106, and two or more layers of organic material 108. When a voltage from a voltage source 110 is applied with sufficient potential, OLED 100 becomes forward biased and a current flows from cathode 106 to anode 104. Cathode 106 provides electrons to organic material 108, and anode 104 removes electrons from organic material 108 or, equivalently, provides holes to organic material 108. The electrons and holes combine in organic material 108 and emit photons of light by way of electroluminescence.

In general, as the current flowing from cathode 106 to anode 104 is increased, more electrons and holes are injected into organic material 108 and more photons of light are emitted thereby increasing the brightness or luminance of OLED 100. The color of the light emitted by OLED 100 depends on the type of organic molecules in organic material 108.

An array of OLEDs, such as OLED 100, can be deposited and patterned on a substrate to form a display. The brightness or luminance of each OLED in the array can be individually controlled to form an image viewable on the display. Today, OLED display technology is used in a wide range of electronic devices and appliances, from small handheld mobile phones to large-panel televisions. The power consumption associated with OLED displays, although often superior to liquid crystal displays, can be relatively high because they are often driven with sufficient power to provide enough light output to compete with the strongest ambient light environments that they may be operated within, such as outdoor environments where sunlight can be strong.

As noted above, the brightness or luminance of an OLED, while forward biased, can be controlled through regulation of the current that passes through it. Therefore, pixel circuits are used in OLED displays to control the current flow through the OLEDs making up the displays so that an image can be formatted. For example, in an active matrix OLED (AMOLED) display, the pixel circuits can include at least two thin film transistors (TFTs) and a storage capacitor to control the current flow through an OLED.

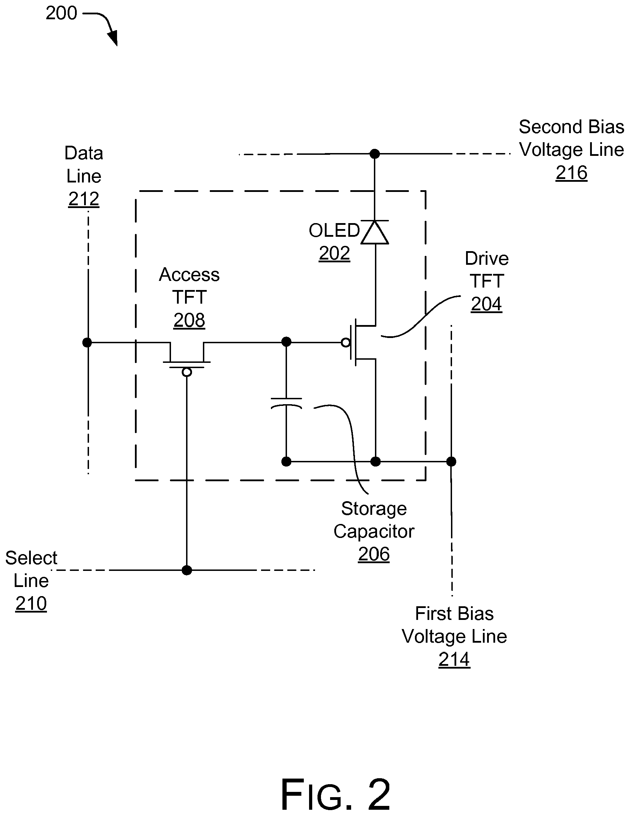

FIG. 2 illustrates one example of such a pixel circuit 200 for an AMOLED display that includes an OLED 202, a drive thin film transistor (TFT) 204, a storage capacitor 206, and an access TFT 208.

In operation, a controller (not shown) selects pixel circuit 200 in an array of pixel circuits using select line 210 and programs the brightness or luminance of OLED 202 using data line 212. More specifically, the controller places an appropriate voltage on select line 210 to turn on access TFT 208 and, once access TFT 208 is on, the controller places an appropriate voltage on data line 212 to program a voltage on the gate of drive TFT 204 such that OLED 202 provides a desired brightness or luminance.

Storage capacitor 206 is used to prevent discharge (due to leakage through access TFT 208) of the voltage programmed on the gate of drive TFT 204. By preventing discharge of the voltage programmed on the gate of drive TFT 204, storage capacitor 206 allows continuous driving of OLED 202 by drive TFT 204 at the desired brightness or luminance while other pixels in the display are selected and programmed. Drive TFT 204 drives OLED 204 using power supplied by a positive voltage source coupled across first bias voltage line 214 and second bias voltage line 216. The positive voltage source also forward biases OLED 202.

Drive TFT 204 is biased in saturation (i.e., |V_{d}|>|V_{gs}-Vₜ|) during normal operation of pixel circuit 200 such that it behaves as a constant current source controlled by the voltage programmed on its gate. Thus, changing the voltage programmed on the gate of drive TFT 204 changes the current through OLED 202 and, thereby, controls its brightness or luminance in a predictable manner. The brightness or luminance of each OLED in an array of pixels can be individually programmed using the configuration of pixel circuit 200 to format an image for display.

Pixel circuit 200 can also be operated in a light-sensing mode the principle of which can be utilized with the inventive fingerprint sensor described below.

To perform in the light sensing mode, OLED 202 in pixel circuit 200 is placed into a photovoltaic and/or photoconductive mode. In the photovoltaic mode, OLED 202 is unbiased, while in the photoconductive mode an external reverse bias is applied across OLED 202. When OLED 202 is not biased (in the photovoltaic mode) or under reverse bias (in the photoconductive mode), OLED 202 operates as a photodiode that is capable of converting light that strikes its surface into current.

The controller (not shown) is configured to place OLED 202 in a photovoltaic and/or photoconductive mode by controlling the voltage applied across first bias voltage line 214 and second bias voltage line 216. More specifically, the controller can alternately switch the voltage applied across first bias voltage line 214 and second bias voltage line 216 from a positive voltage (sufficient to forward bias OLED 202) while operating in the display mode, to be either zero or a negative voltage (sufficient to reverse bias OLED 202) while operating in the sense mode.

When pixel circuit 200 is to operate in the light-sensing mode, the controller is further configured to bias drive TFT 204 in its linear region (i.e., |V_{d}|<|V_{gs}-Vₜ|), as opposed to its saturation region when pixel circuit 200 is functioning in the display mode. The controller can do this by programming an appropriate voltage on the gate of drive TFT 204.

It should be noted that pixel circuit 200 provides only one example of a pixel circuit for an AMOLED display. Other pixel circuits can be further used in embodiments of the present disclosure. For example, other pixel circuits with additional circuitry (e.g., for compensating non-uniformities and stability issues associated with TFTs), different TFT types (e.g., n-type rather than p-type), and/or different programming methods (e.g., current-programming rather than voltage-programming) can be used.

Having considered some operational characteristics of organic light emitting diodes, consider now a discussion of a fingerprint sensor in accordance with one or more embodiments.

### Example Fingerprint Sensor Layouts

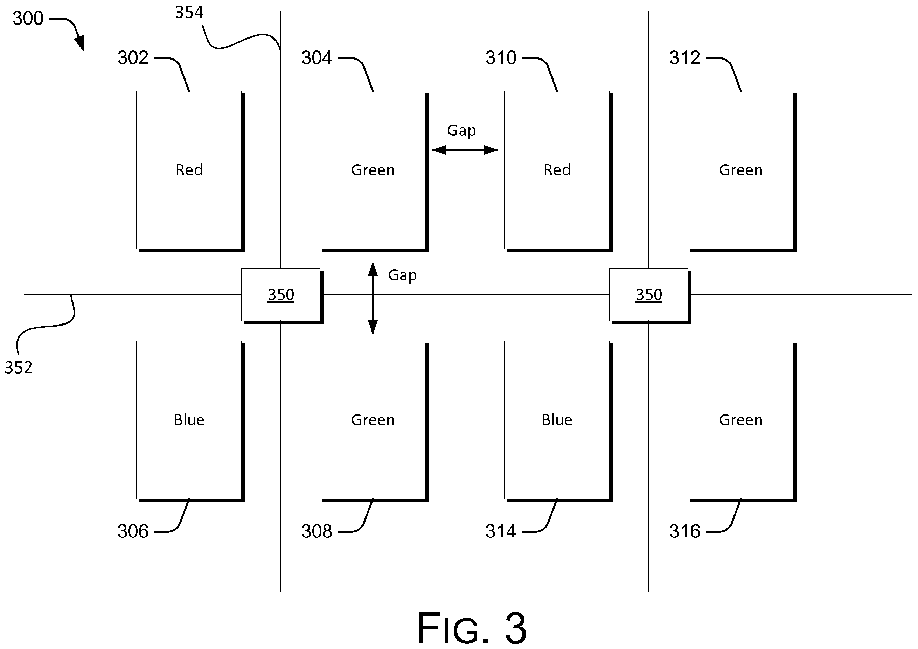

FIG. 3 illustrates aspects of an example fingerprint sensor in accordance with one or more embodiments generally at 300. In this example, the fingerprint sensor includes an array of pixels consisting of four-pixel cells. A first four-pixel cell includes pixels 302, 304, 306, and 308. A second four-pixel cell includes pixels 310, 312, 314, and 316. In this example, pixel 302 is a red pixel, pixel 304 is a green pixel, pixel 306 is a blue pixel, pixel 308 is a green pixel, and so on. Each individual pixel has a corresponding pixel circuit such as pixel circuit 200 (FIG. 2). When the pixel circuits are fabricated, a gap is left between each pixel. Gap size can vary based on resolution, but gap widths typically range from between 20-50 microns. So, for example, a first gap is shown between pixels 304, 310 and a second gap is shown between pixels 304, 308. Lines 352, 354 constitute a control line, and a detect line respectively that are utilized to control a switching transistor and detect and accumulated charge on a capacitor, as will be described below in more detail.

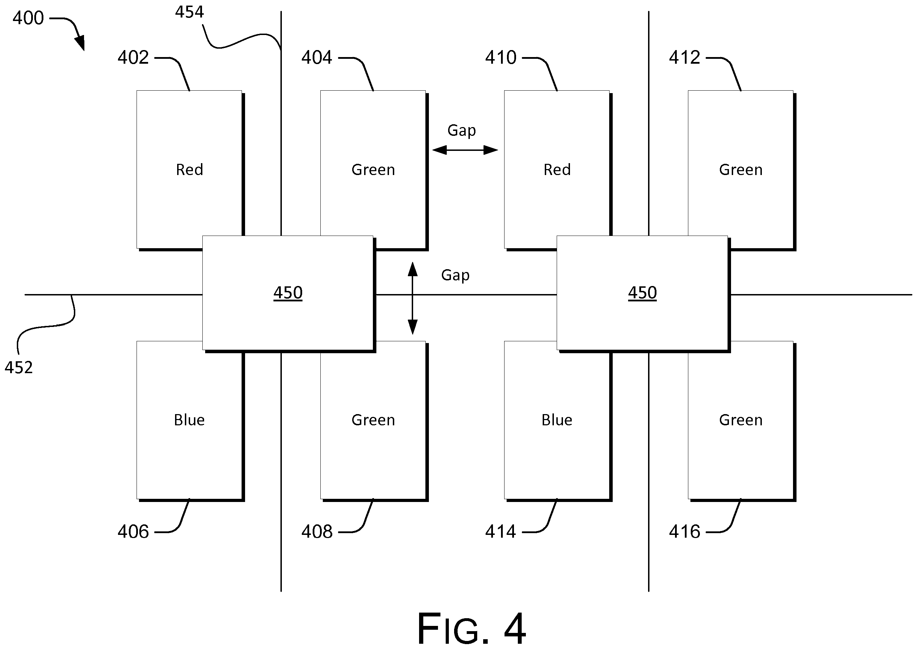

In the illustrated and described embodiment, the fingerprint sensor also includes a plurality of PIN diode circuits 350 formed at least partially within the gap between pixels. In this particular example, one PIN diode circuit is formed for each four-pixel cell. It is to be appreciated and understood, however, that other densities can be employed without departing from the spirit and scope of the claimed subject matter. In this particular example, PIN diode circuits 350 lie entirely within the gap between the pixels. Other configurations are, however, possible. As an example, consider FIG. 4.

FIG. 4 illustrates aspects of an example fingerprint sensor in accordance with one or more other embodiments generally at 400. In this example, the fingerprint sensor includes an array of pixels consisting of four-pixel cells. A first four-pixel cell includes pixels 402, 404, 406, and 408. A second four-pixel cell includes pixels 410, 412, 414, and 416. In this example, pixel 402 is a red pixel, pixel 404 is a green pixel, pixel 406 is a blue pixel, pixel 408 is a green pixel, and so on. Each individual pixel has a corresponding pixel circuit such as pixel circuit 200 (FIG. 2). When the pixel circuits are fabricated, a gap is left between each pixel. So, for example, a first gap is shown between pixels 404, 410 and a second gap is shown between pixels 404, 408.

In the illustrated and described embodiment, the fingerprint sensor also includes PIN diode circuits 450 formed at least partially within the gap between pixels. Here, however, unlike the FIG. 3 embodiment in which the PIN diode circuit is formed entirely within the gap, there is an area of overlap between each PIN diode circuit and an adjacent pixel. In this particular example, one PIN diode circuit is formed for each four-pixel cell. It is to be appreciated and understood, however, that other densities can be employed without departing from the spirit and scope of the claimed subject matter. Lines 452, 454 constitute a control line, and a detect line respectively that are utilized to control a switching transistor and detect an accumulated charge on a capacitor as will be described below in more detail.

Having considered example fingerprint sensor layouts in accordance with one or more embodiments, consider now an example PIN diode circuit in accordance with one or more embodiments.

### Example PIN Diode Circuit

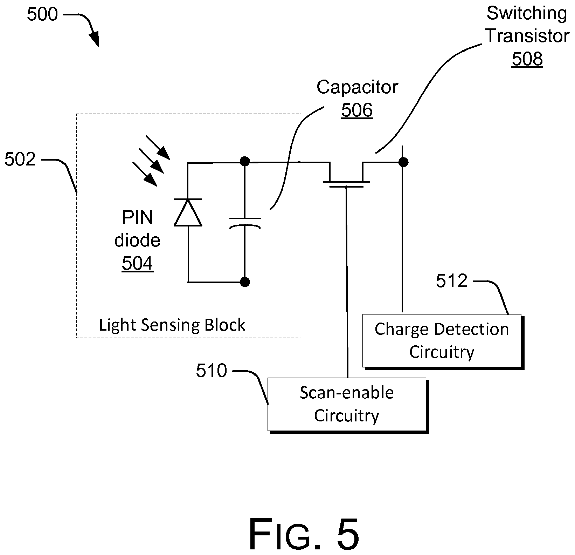

FIG. 5 illustrates an example PIN diode circuit in accordance with one or more embodiments, generally at 500. In this example, PIN diode circuit includes a light sensing block 502 comprising a PIN diode 504 and a capacitor 506 connected across the PIN diode 504. In the illustrated and described embodiment, the PIN diode 504 is implemented as an organic light emitting diode (OLED) and more specifically, an active matrix organic light emitting diode (AMOLED). A switching transistor 508 is connected to the light sensing block 502. The switching transistor 508 has its gate connected to scan-enable circuitry 510. Charge detection circuitry 512 is connected to the source of switching transistor 508, which can be either a p- or n-type transistor.

In operation, light sensing block 502 is configured to sense incoming light in a manner described above. When the switching transistor 508 is turned off, light that is received by PIN diode 504 can be used to charge capacitor 506. In order to read the charge on the capacitor, scan-enable circuitry 510 turns on switching transistor 508 thus allowing charge detection circuitry 512 to detect the charge that has accumulated in the capacitor.

In some embodiments, the PIN diode circuit can be formed without increasing the mask count used to form pixel circuit 200 (FIG. 2). The mask count can range from between 5-8 masks depending on the architecture. Mask count economies are achieved because the PIN diode circuit includes a vertical PIN structure whose material will be deposited to form the OLED of each pixel circuit.

Having considered an example PIN diode circuit, consider now one optimization that can be utilized in forming the PIN diode circuit.

### Example PIN Diode Optimization

Typically, when forming AMOLED displays, low temperature polycrystalline silicon (LTPS) is employed due to its higher electron and hole mobility. LTPS is formed by first depositing an amorphous silicon layer on a substrate, such as glass. The amorphous silicon layer is then re-crystallized to polycrystalline silicon by exposing the amorphous silicon layer to a laser, such as during an excimer laser annealing (ELA) process. However, due to a high concentration of dangling bonds, amorphous silicon possesses native light sensitivity which facilitates formation of light sensors.

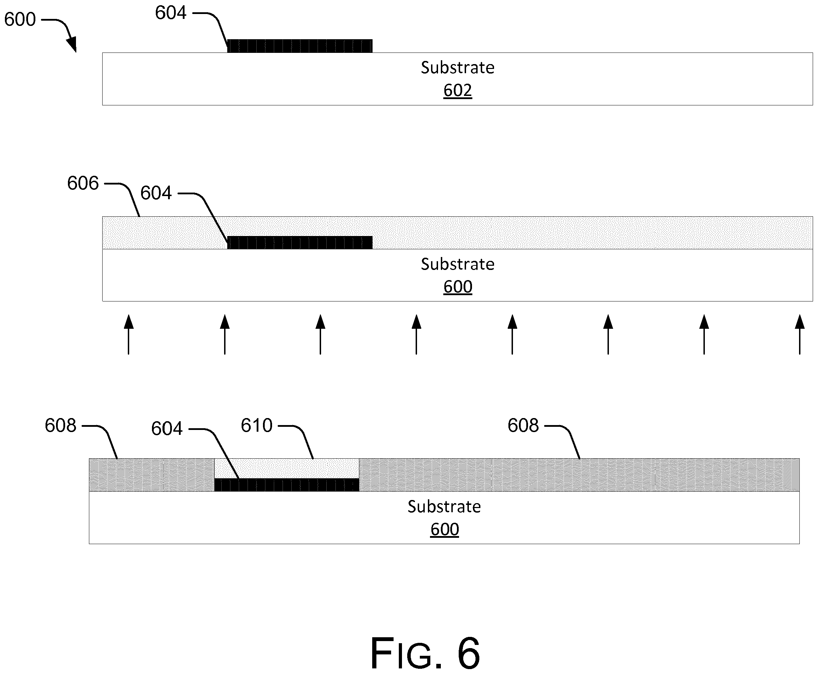

FIG. 6 illustrates a process, generally at 600, in which an improved AMOLED is formed.

A substrate 602 is provided and can include any suitable type of material such as glass, polyimide, and the like. A layer of blocking material 604 is formed over the substrate and can comprise any suitable type of laser absorbing or laser reflecting material. In some instances, blocking material 604 can comprise a metal material, such as molybdenum, aluminum, and the like. Typically, the blocking material can be formed over the substrate and subsequently patterned and etched to leave behind an island of blocking material. Next, a layer of amorphous silicon 606 is formed over the substrate 600. The substrate is next exposed to a laser annealing process, indicated by the arrows on the underside of the substrate 600, which recrystallized the amorphous silicon 606 into a layer of polycrystalline silicon 608. Notice that blocking material 604 prevented an overlying layer of amorphous silicon 610 from being recrystallized in the polysilicon. The layer of amorphous silicon 610 can now serve as a light sensor in the PIN diode circuit.

Having considered an example process in which an improved AMOLED is formed, consider now a device that is configured with embodiments described above.

### In Operation

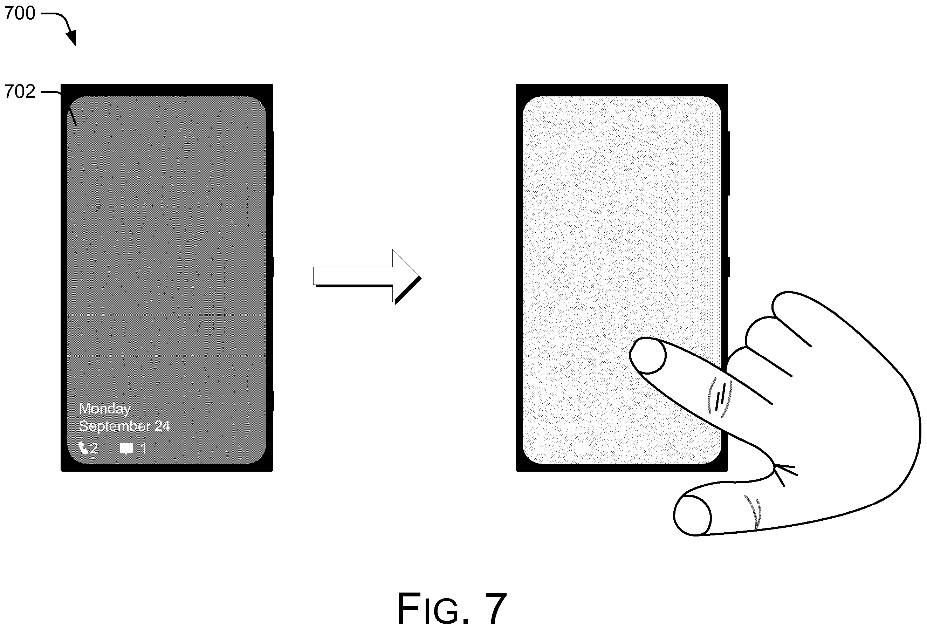

FIG. 7 illustrates an example computing device, generally at 700, that includes a display 702 that is implemented using an array of pixel circuits such as that described in FIG. 2, and an array of fingerprint sensors such as those described above. In this example, computing device 700, in the left most illustration, is not being actively used and is in a locked state. Assume now, that a user picks up the device and wishes to unlock it. They may do so by touching display 702 in any area. Computing device 700 includes a touch sensor that detects when the user touches the display. Upon sensing the touch input, the touch sensor can cause the display to turn on with any suitable type of light, such as white light or another color, to maximize the reflection from the user's finger, as shown in the right most illustration. When this occurs, the fingerprint sensors can detect the light reflected from the finger. This reflected light can then be processed to obtain a fingerprint which can then be used to either unlock the device in the event of a match, or leave the device locked in the event of no match. In some embodiments, the fingerprint is obtained by the charge detection circuitry 512 (FIG. 5) first reading the charge accumulated on each capacitor in the PIN diode circuits. These values can then be mapped, by a suitably-configured application, to grayscale images from which the fingerprints or fingerprint profiles can be obtained.

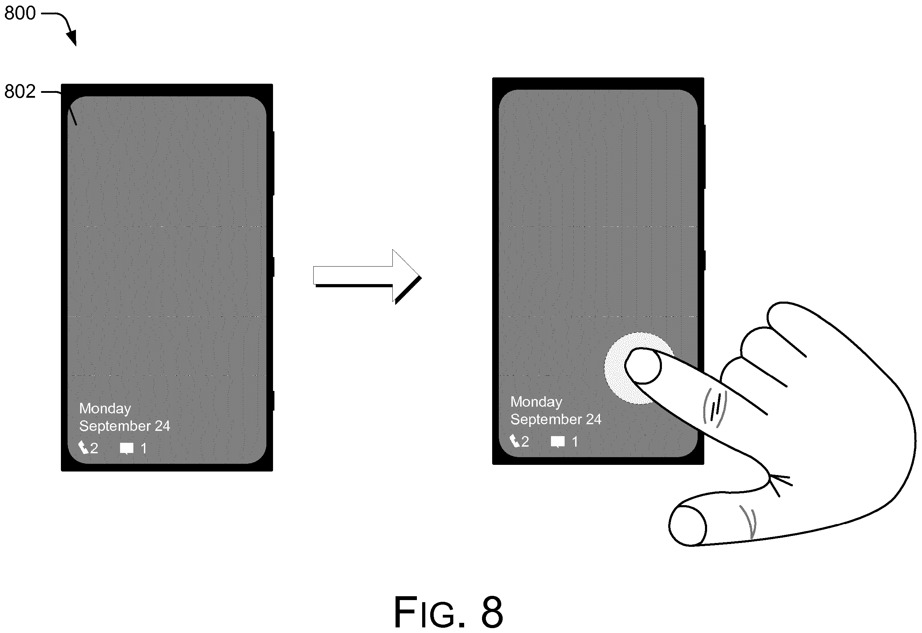

As another example, consider FIG. 8 which illustrates an example computing device, generally at 800, that includes a display 802 that is implemented using an array of pixel circuits such as that described in FIG. 2, and an array of fingerprint sensors such as those described above. In this example, computing device 800, in the left most illustration, is not being actively used and is in a locked state. Assume now, that a user picks up the device and wishes to unlock it. They may do so by touching display 802 in any area. Computing device 800 includes a touch sensor that detects when the user touches the display. Upon sensing the touch input, the touch sensor can cause the display to turn on in a localized area associated with the touch (indicated by the dashed circle) using any suitable type of light, such as white light or another color, to maximize the reflection from the user's finger, as shown in the right most illustration. When this occurs, the fingerprint sensors in the localized region can detect the light reflected from the finger. This reflected light can then be processed to obtain a fingerprint which can then be used to either unlock the device in the event of a match, or leave the device locked in the event of no match. In some embodiments, the fingerprint is first obtained by the charge detection circuitry 512 (FIG. 5) reading the charge accumulated on each capacitor in the PIN diode circuits. These values can then be mapped, by a suitably configured application, to grayscale images from which the fingerprints or fingerprint profiles can be obtained.

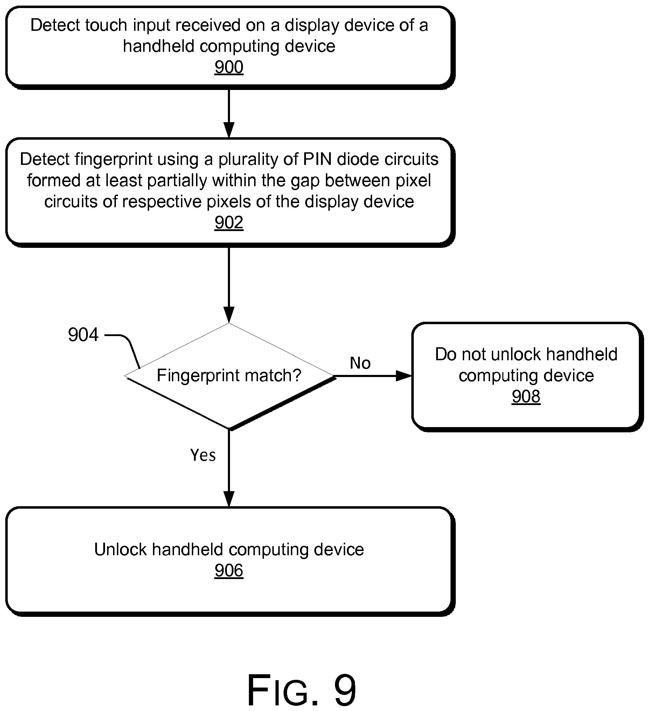

FIG. 9 is a flow diagram that describes steps in a method in accordance with one or more embodiments. The method can be implemented in connection with any suitable hardware, software, firmware, or combination thereof. In at least some embodiments, the method is implemented by a suitably configured handheld computing device, such as a cellular phone, examples of which are provided above and below.

Step 900 detects touch input received on a display device of a handheld computing device. This step can be performed by using a suitably configured touch sensor on the device. In some embodiments, the touch input can be detected anywhere on the display device. In other embodiments, a predefined area of the display device may be designated as a fingerprint area, e.g., the bottom half of the display device, the bottom right corner of the display device, and the like. Step 902 detects a fingerprint using a plurality of PIN diode circuits formed at least partially within the gap between pixel circuits of respective pixels of the display device. In at least some embodiments, this step can be performed by illuminating all or a majority of the pixels of display device to maximize the reflection of light from the touch input. In at least some other embodiments, this step can be performed by illuminating a plurality of pixels in a localized region or area where the touch input occurs. The number of pixels illuminated in the localized region will, in most if not all cases, be less in number than half, a quarter, or even an eighth of the total number of pixels that comprise the display device.

Step 904 ascertains whether a detected fingerprint matches a fingerprint or fingerprint profile stored on the computing device. If the detected fingerprint matches the stored fingerprint, step 906 unlocks the handheld computing device. If, on the other hand, the detected fingerprint does not match the stored fingerprint, step 908 does not unlock the handheld computing device.

Having considered an example fingerprint sensor as described above, consider now how a PIN diode circuit, such as PIN diode circuit 500 (FIG. 5), can be used to implement self-compensation functionality.

### Self-Compensating AMOLEDs

As noted above, in various embodiments, a series of PIN diodes, formed as active matrix organic light emitting diodes (AMOLEDs) can enable an associated display to be self-compensating. This can be done by using the PIN diodes as part of PIN diode circuits, such as PIN diode circuit 500 in FIG. 5. In this manner, the PIN diode circuit comprises part of a self-compensating system that is used to self-compensate the display pixels to mitigate burn-in issues and mura issues. The PIN diode circuits can be laid out in a manner identical to that described in FIG. 3 and FIG. 4, and can include any of the embodiments described above. Specifically, the PIN diodes or PIN diode circuits can be used to sense the brightness of an area of the display. That is, when the individual pixels adjacent the PIN diode circuits are illuminated, the corresponding PIN diode circuits can detect the brightness of an area of the display. The illumination of the pixel or pixels charges the corresponding capacitors of the individual PIN diode circuits. Scan-enable circuitry, such as scan-enable circuitry 510 (FIG. 5) can then turn on switching capacitor 508, as described above, to enable the charge detection circuitry 512 to detect the charge on individual capacitors. The value of the charge on the individual capacitors can then be used by the charge detection circuitry or another processing component, to enable computation of a compensation factor that can then be used to compute a calibrated brightness value that can be used program or drive individual pixels or, more accurately, individual pixel circuitry of the display.

In at least some embodiments, the charge value on each capacitor can be mapped to a look-up table which provides a mapping of charge values to compensation factors. The compensation factor can then be used to compute a calibrated brightness value that can be used to drive the corresponding pixel with which an individual PIN diode circuit is associated.

Note that because of burn-in and mura effects, as well as general aging of the individual pixels, the detected charge on individual pixels for a given illumination will vary over time. By using the PIN diode circuits as described above, the pixel circuits can be self-compensated in the manner just described.

In some embodiments, particularly in those computing devices with larger form-factor displays, PIN diode circuits can be associated with every pixel, every two pixels, every four pixels, and the like. In embodiments where a PIN diode circuit is associated with multiple pixels, those pixels can be treated as units or cells. The PIN diode circuit can then detect the brightness of the area corresponding to the unit or cell. The unit or cell, as a whole, can then be compensated based on the process described above and below.

In at least some embodiments, compensation processing can take place at any suitable time. In some instances, compensation processing can take place when a device is charging, or otherwise not in use. Alternately or additionally, compensation processing can take place once per day, once per month, or any time the device is idle.

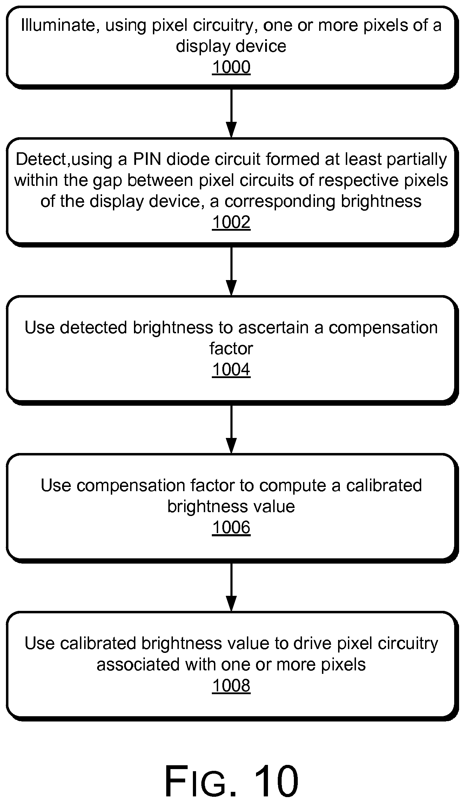

FIG. 10 is a flow diagram that describes steps in a method in accordance with one or more embodiments. The method can be implemented in connection with any suitable hardware, software, firmware, or combination thereof. In at least some embodiments, the method is implemented by a suitably configured computing device, examples of which are provided above and below.

One or more pixels of a display device are illuminated using pixel circuitry (block 1000), such as that described above. When the pixel or pixels are illuminated, the corresponding brightness is detected, at block 1002, using a PIN diode circuit formed at least partially within the gap between pixel circuits of respective pixels of the display device. In at least some embodiments, when the pixel or pixels are illuminated, the PIN diode circuit detects the illumination as described above, and a corresponding capacitor is charged. The brightness is detected by reading the corresponding charge on the capacitor of the PIN diode circuit as described above. The detected brightness is used, at block 1004, to ascertain a compensation factor. This can be done in any suitable way. For example, in at least some embodiments, the corresponding charge value on the capacitor can be mapped to a lookup table which provides a mapping of charge values to compensation factors. The compensation factor is then used to compute a calibrated brightness value (block 1006). The calibrated brightness value can reside in the form of a voltage that can be used to drive the gate of a drive TFT in the pixel circuitry. For example, in the FIG. 2 circuit, drive TFT 204 is biased in saturation (i.e., |Vd|>|Vgs-Vt|) during normal operation of pixel circuit 200 such that it behaves as a constant current source controlled by the voltage programmed on its gate. Thus, changing the voltage programmed on the gate of drive TFT 204 changes the current through OLED 202 and, thereby, controls its brightness or luminance in a predictable manner. The brightness or luminance of each OLED in an array of pixels can be individually programmed using the configuration of pixel circuit 200 to format an image for display. Accordingly, the calibrated brightness value is used to drive pixel circuitry associated with one or more pixels (block 1008).

Compensating the AMOLEDs in this manner can mitigate issues associated with mura and burn-in, as will be appreciated by the skilled artisan. The self-compensating embodiments can be particularly useful in the context of large displays such as televisions which have a smaller PPI which, in turn, enables a larger area for the sensors. Furthermore, the burn-in issue is particularly acute in television scenarios. Moreover, by mitigating burn-in and mura issues, manufacturing yields can be increased since these issues, particularly the mura issue, is one of the most significant factors that decreases yield. Furthermore, the described embodiments can enable a simpler pixel circuit, such as the one described above, which in turn, enables devices to be fabricated with higher PPIs.

Having considered an example method in accordance with one or more embodiments, consider now some implementation details in accordance with one or more embodiments.

### Implementation Details

In some embodiments, the above-described fingerprint sensor functionality can be implemented in a one-chip configuration. This one-chip configuration would include a read-out integrated circuit as well as display driver integrated circuit. In other embodiments, the above-described fingerprint sensor functionality can be implemented in a two-chip configuration in which the fingerprint sensors reside on one chip while the sensing integrated circuit (referred to above as the charge detection circuitry 512) would reside on a second chip with an operable connection between the two by way of a flex material. Maintaining the read-out integrated circuit and the display driver integrated circuit on different chips would facilitate the operation of both, due to the higher breakdown voltage of the display driver, as opposed to the low noise amplification parameters associated with the read-out integrated circuit.

### Purging the Storage Capacitors

During the course of operation, some leakage current from the PIN diodes may cause the associated capacitors to undesirably acquire a small charge. In these instances, the sensing circuitry, i.e., scan-enable circuitry 510 (FIG. 5) can purge the storage capacitors by removing the pre-charge electrons. This can improve sensor accuracy when the fingerprint scanner is operational.

### Using a Multiplexer

In some embodiments, both fingerprint sensor and self-compensating embodiments, a multiplexer (MUX) can be incorporated for light sensing. In the case of light sensing, a higher refresh rate, such as 60 Hz, is not needed. Rather, much lower refresh rates can be utilized such as 1 Hz, 2 Hz, 3 Hz and so on. This can permit the use of large MUXs, such as a 50:1 MUX where 1 line can share 50 pixels. Thus, with the MUX, multiple sensor lines can be connected into one line and operation can be distributed based on timing. So, for example, with a 50:1 MUX, the first sensor line can be scanned using 0-0.02 second timing, the second sensor line can be scanned using 0.02-0.04 timing and so on.

### Using Oxide TFTs

In some embodiments, oxide TFTs can be utilized to implement the PIN diodes. This is due to better performance including a lower leakage current.

### Use of micro-mirrors and light guides

In some self-compensating scenarios, the PIN diodes can be formed to include micro-mirrors that increase the quantity of light received by the PIN diode. This can be done during fabrication by patterning a reflective deposition layer adjacent the AMOLEDs. Any suitable type of reflective deposition layer can be utilized, as will be appreciated by the skilled artisan. In addition, individual PIN diodes in the light sensing block, such as PIN diode 504 in FIG. 5, can be formed to include light-guiding structure that enhances light reception from the PIN diode's associated pixel or pixels, yet blocks or reduces the amount of light received from other pixels. As an example, in FIG. 6, anisotropicly-etched sidewalls can be formed adjacent amorphous silicon 610 to a desired height to channel light from the PIN diode's associated pixel or pixels, while blocking at least some light from neighboring pixels.

### Dual Function

In at least some embodiments, the series of PIN diodes that provide the fingerprint sensor can also serve a dual role insofar as supporting the self-compensating function. In these instances, design consideration is given to decoupling the fingerprint sensor from the display input which is used for compensation. Specifically, a suitable algorithm can be used to achieve decoupling. For example, display input can be measured and normalized as basic noise. When fingerprint input is available, the noise can be subtracted out.

### Example Computing Device

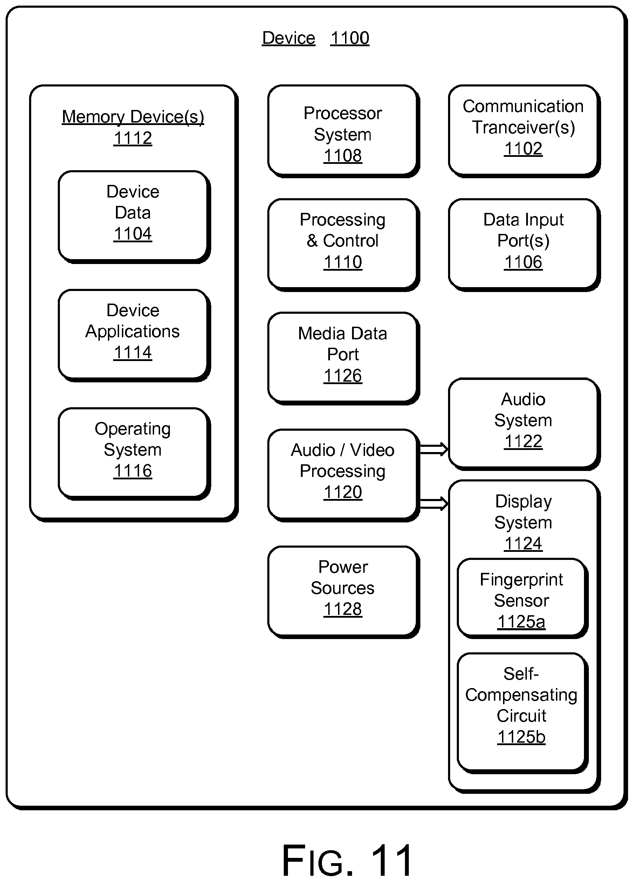

FIG. 11 illustrates various components of an example device 1100 in which embodiments of the fingerprint sensor described above can be implemented. The example device 1100 can be implemented as any type of device including a device with a large display, such as a television, a handheld device, such as any type of client device, mobile phone, tablet device, entertainment device, gaming device, media playback device, and/or other type of device. For example, the device of FIGS. 7 and 8 may be implemented as the example device 1100.

The device 1100 includes communication transceivers 1102 that enable wired and/or wireless communication of device data 1104 with other devices. Additionally, the device data can include any type of audio, video, and/or image data. Example transceivers include wireless personal area network (WPAN) radios compliant with various IEEE 802.15 (BluetoothTM) standards, wireless local area network (WLAN) radios compliant with any of the various IEEE 802.11 (WiFiTM) standards, wireless wide area network (WWAN) radios for cellular phone communication, wireless metropolitan area network (WMAN) radios compliant with various IEEE 802.15 (WiMAXTM) standards, and wired local area network (LAN) Ethernet transceivers for network data communication.

The device 1100 may also include one or more data input ports 1106 via which any type of data, media content, and/or inputs can be received, such as user-selectable inputs to the device, messages, music, television content, recorded content, and any other type of audio, video, and/or image data received from any content and/or data source. The data input ports may include USB ports, coaxial cable ports, and other serial or parallel connectors (including internal connectors) for flash memory, DVDs, CDs, and the like. These data input ports may be used to couple the device to any type of components, peripherals, or accessories such as microphones and/or cameras.

The device 1100 includes a processing system 1108 of one or more processors (e.g., any of microprocessors, controllers, and the like) and/or a processor and memory system implemented as a system-on-chip (SoC) that processes computer-executable instructions. The processor system may be implemented at least partially in hardware, which can include components of an integrated circuit or on-chip system, an application-specific integrated circuit (ASIC), a field-programmable gate array (FPGA), a complex programmable logic device (CPLD), and other implementations in silicon and/or other hardware. Alternatively or in addition, the device can be implemented with any one or combination of software, hardware, firmware, or fixed logic circuitry that is implemented in connection with processing and control circuits, which are generally identified at 1110. The device 1100 may further include any type of a system bus or other data and command transfer system that couples the various components within the device. A system bus can include any one or combination of different bus structures and architectures, as well as control and data lines.

The device 1100 also includes computer-readable storage memory 1112 that enable data storage, such as data storage devices that can be accessed by a computing device, and that provide persistent storage of data and executable instructions (e.g., software applications, programs, functions, and the like). Examples of the computer-readable storage memory 1112 include volatile memory and non-volatile memory, fixed and removable media devices, and any suitable memory device or electronic data storage that maintains data for computing device access. The computer-readable storage memory can include various implementations of random access memory (RAM), read-only memory (ROM), flash memory, and other types of storage media in various memory device configurations. The device 1100 may also include a mass storage media device.

The computer-readable storage memory 1112 provides data storage mechanisms to store the device data 1104, other types of information and/or data, and various device applications 1114 (e.g., software applications). For example, an operating system 1116 can be maintained as software instructions with a memory device and executed by the processing system 1108. The device applications may also include a device manager, such as any form of a control application, software application, signal-processing and control module, code that is native to a particular device, a hardware abstraction layer for a particular device, and so on. The device applications can also include an application that performs authentication based on a fingerprint sensed by a fingerprint sensor as described above and below.

The device 1100 also includes an audio and/or video processing system 1120 that generates audio data for an audio system 1122 and/or generates display data for a display system 1124. The display system 1124 can include a fingerprint sensor 1125a as described above. Alternately or additionally, the display system 1124 can include a self-compensating circuit 1125b. In instances where both the fingerprint sensor and the self-compensating circuit are included, such can be integrated as a single component with dual functionality, as described above. The audio system and/or the display system may include any devices that process, display, and/or otherwise render audio, video, display, and/or image data. Display data and audio signals can be communicated to an audio component and/or to a display component via an RF (radio frequency) link, S-video link, HDMI (high-definition multimedia interface), composite video link, component video link, DVI (digital video interface), analog audio connection, or other similar communication link, such as media data port 1126. In implementations, the audio system and/or the display system are integrated components of the example device. Alternatively, the audio system and/or the display system are external, peripheral components to the example device.

The device 1100 can also include one or more power sources 1128, such as when the device is implemented as a mobile device. The power sources may include a charging and/or power system, and can be implemented as a flexible strip battery, a rechargeable battery, a charged super-capacitor, and/or any other type of active or passive power source.

Although embodiments of fingerprint sensor embedded active matrix organic light emitting diode (AMOLED) displays and self-compensating circuitry have been described in language specific to features and/or methods, the subject of the appended claims is not necessarily limited to the specific features or methods described. Rather, the specific features and methods are disclosed as example implementations of fingerprint sensor embedded active matrix organic light emitting diode (AMOLED) displays and self-compensating circuitry. Further, various different embodiments are described and it is to be appreciated that each described embodiment can be implemented independently or in connection with one or more other described embodiments.

## Claims

1. A method for self-compensating an active matrix organic light emitting diode, AMOLED, display (702; 802; 1124), the method comprising:
illuminating, using pixel circuitry (200), one or more pixels (302-316; 402-416) of the AMOLED display, wherein individual pixels are separated from other pixels by a gap;
detecting, using at least one PIN diode circuit (350; 450; 500) formed at least partially within a gap between pixel circuits of respective pixels of the AMOLED display, a corresponding brightness, each PIN diode circuit being associated with multiple pixel circuits, and each PIN diode circuit including a PIN diode (504) implemented as an AMOLED operable in a light sensing mode;
using the detected brightness to ascertain a compensation factor;
using the compensation factor to compute a calibrated brightness value; and
using the calibrated brightness value to drive pixel circuitry associated with one or more pixels.

2. The method as recited in claim 1, wherein said using the detected brightness to ascertain a compensation factor comprises using a lookup table that maps charges on a capacitor (506) of said at least one PIN diode circuit (350; 450; 500) to a corresponding compensation factor.

3. The method as recited in claim 1 or claim 2, wherein said at least one PIN diode circuit (350; 450; 500) comprises a light sensing block (502) including a PIN diode (504) and a capacitor (506) connected across the PIN diode, and a switching transistor (508) connected to the light sensing block.

4. The method as recited in any of claims 1 to 3, wherein said at least one PIN diode circuit (350; 500) lies entirely within the gap between pixel circuits.

5. A computing device (700; 800; 1100) comprising a processing system (1108) and an active matrix organic light emitting diode, AMOLED, display (702; 802; 1124), and at least one PIN diode circuit being associated with multiple pixel circuits of the display, each PIN diode circuit including a PIN diode implemented as an AMOLED operable in a light sensing mode;
wherein the computing device is configured to perform the method of any of claims 1 to 4.

## Patentansprüche

1. Verfahren zum Selbstkompensieren einer Anzeige einer organischen Leuchtdiode mit aktiver Matrix (*active matrix organic light emitting diode* - AMOLED) (702; 802; 1124), wobei das Verfahren Folgendes umfasst:
Beleuchten, unter Verwendung einer Pixelschaltung (200), eines oder mehrerer Pixel (302-316; 402-416) der AMOLED-Anzeige, wobei einzelne Pixel durch eine Lücke von anderen Pixeln getrennt sind;
Feststellen, unter Verwendung mindestens einer PIN-Diodenschaltung (350; 450; 500), die mindestens teilweise innerhalb einer Lücke zwischen Pixelschaltungen jeweiliger Pixel der AMOLED-Anzeige ausgebildet ist, einer entsprechende Helligkeit, wobei jede PIN-Diodenschaltung mehreren Pixelschaltungen zugehörig ist, und jede PIN-Diodenschaltung eine PIN-Diode (504) enthält, die als eine AMOLED implementiert ist und in einem Lichterfassungsmodus betrieben werden kann;
Verwenden der festgestellten Helligkeit, um einen Kompensationsfaktor zu ermitteln;
Verwenden des Kompensationsfaktors, um einen kalibrierten Helligkeitswert zu berechnen; und
Verwenden des kalibrierten Helligkeitswerts, um Pixelschaltungen, die einem oder mehreren Pixeln zugehörig sind, anzusteuern.

2. Verfahren nach Anspruch 1, wobei das Verwenden der festgestellten Helligkeit, um einen Kompensationsfaktor zu ermitteln, das Verwenden einer Nachschlagetabelle umfasst, die Ladungen auf einem Kondensator (506) der mindestens einen PIN-Diodenschaltung (350; 450; 500) einem entsprechenden Kompensationsfaktor zuordnet.

3. Verfahren nach Anspruch 1 oder 2, wobei die mindestens eine PIN-Diodenschaltung (350; 450; 500) einen Lichterfassungsblock (502), der eine PIN-Diode (504) und einen Kondensator (506) enthält, die über die PIN-Diode hinweg angeschlossen sind, und einen Schalttransistor (508), der mit dem Lichterfassungsblock verbunden ist, umfasst.

4. Verfahren nach einem der Ansprüche 1 bis 3, wobei die mindestens eine PIN-Diodenschaltung (350; 500) vollständig innerhalb der Lücke zwischen Pixelschaltungen liegt.

5. Rechenvorrichtung (700; 800; 1100), die ein Verarbeitungssystem (1108) und eine Anzeige einer organischen Leuchtdiode mit aktiver Matrix (AMOLED) (702; 802; 1124) und mindestens eine PIN-Diodenschaltung, die mehreren Pixelschaltungen der Anzeige zugehörig ist, umfasst, wobei jede PIN-Diodenschaltung eine PIN-Diode enthält, die als eine AMOLED implementiert ist und in einem Lichterfassungsmodus betriebsfähig ist;
wobei die Rechenvorrichtung konfiguriert ist, das Verfahren nach einem der Ansprüche 1 bis 4 durchzuführen.

## Revendications

1. Procédé d'auto-compensation d'un afficheur à diodes électroluminescentes organiques à matrice active, AMOLED (702 ; 802 ; 1124), le procédé comprenant :
l'éclairage, à l'aide d'une circuiterie (200) de pixels, d'un ou plusieurs pixels (302-316 ; 402-416) de l'afficheur AMOLED, les pixels individuels étant séparés des autres pixels par un espace ;
la détection, à l'aide d'au moins un circuit de diode PIN (350 ; 450 ; 500) formé au moins partiellement à l'intérieur d'un espace entre des circuits de pixels de pixels respectifs de l'afficheur AMOLED, d'une luminosité correspondante, chaque circuit de diode PIN étant associé à de multiples circuits de pixels, et chaque circuit de diode PIN comportant une diode PIN (504) mise en fonction sous la forme d'une AMOLED pouvant fonctionner dans un mode de détection de lumière ;
l'utilisation de la luminosité détectée pour établir un facteur de compensation ;
l'utilisation du facteur de compensation pour calculer une valeur de luminosité étalonnée ; et
l'utilisation de la valeur de luminosité étalonnée pour exciter des circuits de pixels associés à un ou plusieurs pixels.

2. Procédé selon la revendication 1, dans lequel ladite utilisation de la luminosité détectée pour établir un facteur de compensation comprend l'utilisation d'une table de consultation qui met des charges sur un condensateur (506) dudit au moins un circuit de diode PIN (350 ; 450 ; 500) en correspondance avec un facteur de compensation correspondant.

3. Procédé selon la revendication 1 ou la revendication 2, dans lequel ledit au moins un circuit de diode PIN (350 ; 450 ; 500) comprend un bloc de détection de lumière (502) comportant une diode PIN (504) et un condensateur (506) connecté à travers la diode PIN, et un transistor de commutation (508) connecté au bloc de détection de lumière.

4. Procédé selon l'une quelconque des revendications 1 à 3, dans lequel ledit au moins un circuit de diode PIN (350 ; 500) se trouve entièrement à l'intérieur de l'espace entre les circuits de pixels.

5. Dispositif informatique (700 ; 800 ; 1100) comprenant un système de traitement (1108) et un afficheur à diodes électroluminescentes organiques à matrice active, AMOLED (702 ; 802 ; 1124), et au moins un circuit de diode PIN associé à plusieurs circuits de pixels de l'afficheur, chaque circuit de diode PIN comportant une diode PIN mise en fonction sous la forme d'une AMOLED pouvant fonctionner dans un mode de détection de lumière ;
dans lequel le dispositif informatique est configuré pour exécuter le procédé selon l'une quelconque des revendications 1 à 4.
